# EUROPEAN PATENT APPLICATION

(11) **EP 1 463 277 A2**
(43) Date of publication of application: **29.09.2004**
(21) Application number: 04000049.9
(22) Date of filing: 05.01.2004
(51) Int. Cl.: H04M 1/60, H04M 19/04

(54) **System and method for improving sound quality of a multifunction device MFD in a mobile communication terminal**

(30) Priority: 29.03.2003 KR 2003019817
(71) Applicant: LG ELECTRONICS INC., Seoul (KR)
(72) Inventor: Park, Woo-Seog, Gwangmyeong Gyeonggi-Do (KR)
(74) Representative: von Hellfeld, Axel, Dr. Dipl.-Phys.,

(57) **Abstract**

A mobile terminal having an MFD comprises a signal processor that outputs an analog signal and a control signal; a filter module in communication with the signal processor to output a filtered signal and an unfiltered signal; and a switch in communication with the filter module and responsive to the control signal to output the filtered signal to the MFD when the control signal is at a first level, and to output the unfiltered signal when the control signal is at a second level.

## Description

### BACKGROUND OF THE INVENTION

### Field of the Invention

The present invention relates to a mobile communication terminal having an MFD (Multi Function Device) and, more particularly, to an apparatus and method for improving a sound quality of the MFD.

### Description of the Background Art

Generally, a mobile communication terminal is a portable device that communicates information such as voice, character or image wirelessly. Terminal manufacturers are trying to make the terminals more compact and light for the convenience of portability. Diverse function-integrated parts are favorably used to reduce the size or the number of parts. A Multi Function Device (MFD) is a typical integrated part of the current mobile communication terminals.

The MFD can operate to vibrate, play a melody and perform other diverse functions of the mobile communication terminal, by integrating functions of a receiver, a speaker, a buzzer and a vibration motor. The MFD includes a vibration plate for a voice and a vibration plate for vibration. When an oscillation frequency of approximately 120∼180Hz is inputted to the vibration plate, the MFD generates a vibration function, while a frequency of voice band is inputted to the vibration plate, the MFD generates a voice sound.

The structure of the MFD for a receiver and a speaker is the same as that of a conventional art, while the vibration plate is adhered to the voice plate unlike in the conventional art. In addition, the conventional vibration motor is vibrated by way of applying of a voltage, while the MFD is vibrated by an oscillation frequency.

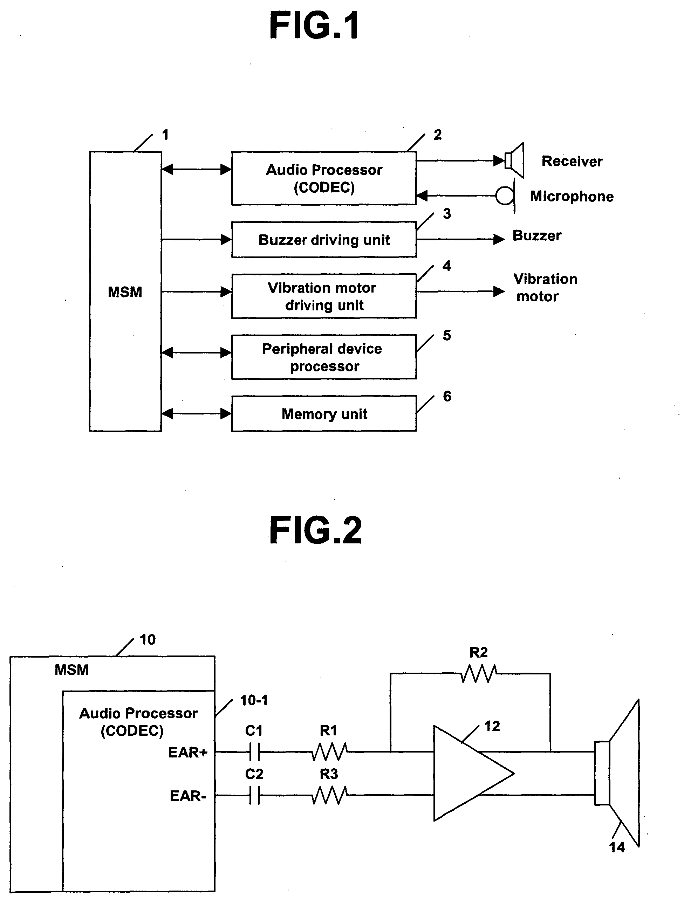

Figure 1 illustrates general mobile communication terminal. As shown in Figure 1, the general mobile communication terminal includes: a processing unit 1, an audio processor 2, a buzzer driving unit 3, a vibration motor driving unit 4, a peripheral device processor 5 and a memory unit 6.

The processing unit 1 is a central calculation unit for controlling each element and processing a signal for a modem function, and serves to demodulate a digital audio signal received through a base station to a voice signal, a ringing signal and an oscillation frequency signal.

The audio processor 2 is can be a CODEC (Coder/Decoder) for example. The audio processor 2 converts a voice signal demodulated in the processing unit 1 into an analog voice signal and provides it to the receiver. The audio processor 2 also converts an analog voice signal inputted through a microphone to a digital voice signal to output it to the processing unit 1.

The buzzer driving unit 3 drives a buzzer according to a buzzer signal (e.g., a ring signal) demodulated in the processing unit 1 when a call is terminated. The vibration motor driving unit 4 drives the vibration motor, according to an oscillation frequency signal demodulated in the processing unit 1 when a call is terminated. The peripheral device processor 5 controls peripheral devices such as an LCD display, a key pad or a power supply device to process generated signals. The memory unit 6 stores various programs for a terminal and signal processing information.

Figure 2 illustrates structure of a mobile communication terminal adopting the MFD in accordance with the conventional art. As shown in Figure 2, the conventional mobile communication terminal adopting the MFD includes an audio processor 10-1 provided in an processing unit 10; an audio amplifier 12 for amplifying an analog audio signal outputted from the audio processor 10-1; and an MFD 14 for performing voice, ring and vibration functions according to an output signal from the audio amplifier 12.

When a mobile communication terminal is in a call communication state, a voice signal received from a base station is demodulated to a digital voice signal in the processing unit 10. The audio processor 10-1 converts the demodulated digital voice signal into an analog voice signal, adjusts a sound volume to a preset value and outputs it to output ports (EAR+, EAR-).

As the voice signals outputted respectively through the output ports (EAR+, EAR-) pass through capacitors (C1, C2), their DC component is removed, which are then inputted to the audio amplifier 12 through resistances R1 and R3. The audio amplifier 12 amplifies the received voice signal at a predetermined amplification rate (R2/R1) and outputs it to the MFD 14. As the amplified voice passes through a voice coil and the vibration plate of the MFD 14, sound is generated.

When a call is terminated in a state that a user sets a ring sound for a call termination notification, the audio processor 10-1 sets a gain value for determining the strength of a sound greater than a voice signal and outputs a ring sound signal, and the follow-up operation is the same as that of the call mode.

When a call is terminated in a state that the user sets a vibration mode for a call termination notification, the audio processor 10-1 outputs an oscillation frequency signal corresponding to the oscillation frequency of the MFD 14. The oscillation frequency signal is amplified in the voice amplifier 12 and is provided to the MFD 14. Then, the vibration plate of the MFD 14 resonates with a resonance frequency of the signal to make a vibration operation.

Usually, in the MFD, the vibration plate for voice and the vibration plate for vibration are implemented close, facing to each other in structure, so that when a frequency of an input signal is identical to the resonance frequency (120-180Hz), the vibration operation is performed. However, because a frequency corresponding to the resonance frequency exists in the voice signal or the ring signal, when a voice or a ring is outputted, an echo phenomenon is generated due to the weak vibration according to the resonance frequency, which degrades the quality of the voice or the ring.

### SUMMARY OF THE INVENTION

A method for improving a sound quality of an MFD is provided. The method comprises amplifying an audio signal received from a base station; removing an oscillation frequency component from the amplified audio signal; and switching the amplified audio signal and the oscillation frequency component-removed audio signal to an MFD according to an operation mode of a terminal. The audio signal is one of a voice signal, a ring signal and an oscillation frequency signal. The frequency component-removed audio signal is a voice signal or a ring signal.

In one embodiment, the method comprises dividing an audio signal into first and second paths according to a path control signal; amplifying the signal on the second path; filtering the signal on the first path and the amplified signal on the second path; and selectively outputting the filtered signal and the amplified signal on the second path to an MFD according to a vibration enable signal. The audio signal is one of a voice signal, a ring signal and an oscillation frequency signal, and the filtered signal of the second path is a ring signal.

The signal on the first path is a voice signal and the signal on the second path is one of a ring signal and an oscillation frequency signal. The audio signal is outputted to the first path in a call mode and outputted to the second path in a ring mode and a vibration mode. The filtered signal is outputted to the MFD in the call mode and in the ring mode, while the amplified signal is outputted as it is to the MFD in the vibration mode.

The path control signal has a low level in the call mode and a high level in the ring mode and in the vibration mode, while the vibration enable signal has a low level in the call mode and the ring mode and a high level in the vibration mode. In certain embodiments, an apparatus for improving a sound quality of an MFD comprises an audio amplifier for amplifying an audio signal received from a base station; a filtering unit for filtering an output signal of the audio amplifier; and a switching unit for selectively outputting an output signal of the filtering unit and the audio amplifier according to a vibration enable signal. The vibration enable signal is outputted from an processing unit (Mobile Station Modem) corresponding to an operation of a terminal, and has a low level in a call mode and in a ring mode and a high level in a vibration mode.

In accordance to another embodiment, an apparatus for improving a sound quality of an MFD comprises a first switching unit for selectively switching an audio signal received from a base station to first or to second path according to a path control signal; an audio amplifier for amplifying the audio signal of the second path; a filtering unit for filtering the audio signal of the first path and the output signal of the audio amplifier; and a second switching unit for selectively switching an output signal of the filtering unit and the audio amplifier to an MFD according to a vibration enable signal.

The first and second switching units comprise of two analog audio switches, respectively, and the filtering unit comprises of two high pass filters. The path control signal and the vibration enable signal are outputted from a processing unit (Mobile Station Modem) corresponding to an operation mode of the terminal. The path control signal has a low level in the call mode and a high level in the ring mode and in the vibration mode, while the vibration enable signal has a low level in the call mode and the ring mode and a high level in the vibration mode. The audio signal is one of a voice signal, a ring signal and an oscillation frequency signal. In some embodiments, the signal of the first path is a voice signal, while the signal of the second path is one of a ring signal and an oscillation frequency signal.

The filtered output signal of the audio amplifier is a ring signal. The first switching unit outputs an audio signal to the first path in a call mode and outputs it to the second path in a ring mode and in a vibration mode. The second switching unit outputs an output signal of the filtering unit to the MFD in the call mode and in the ring mode, and outputs an output signal of the audio amplifier to the MFD in the vibration mode.

In accordance with yet another embodiments, a method of processing a communication signal comprises determining if a received signal is at least one of a voice signal and an alert signal; filtering the received signal to produce a first voice signal, if the received signal is a voice signal; amplifying the received signal to generate a first amplified alert signal, if the received signal is an alert signal; determining if a vibration status is set; filtering the first amplified alert signal to generate a ring signal, if the vibration status is not set; producing a vibration signal, if the vibration status is set; and producing at least one of the voice signal, the ring signal, and the vibration signal as output, and providing the output signal to a multi function device (MFD).

The method further comprises causing the MFD to vibrate, if the output signal comprises the vibration signal; causing the MFD to ring, if the output signal comprises a ring signal; and causing the MFD to produce voice output, if the output signal comprises a voice signal. Accordingly, filtering the voice signal and filtering the first amplified alert signal removes an oscillation frequency component from the first amplified alert signal.

In another embodiment, a method of improving sound quality comprises amplifying the received signal to generate an amplified signal; filtering the amplified signal to generate a filtered signal, if a vibration status is not set; and producing a vibration signal, if the vibration status is set and the amplified signal does not contain voice components. Filtering the amplified signal further comprises producing a voice signal, if the amplified signal comprises voice components. In one embodiment, filtering the amplified signal further comprises producing a ring signal, if the amplified signal comprises ring components.

An apparatus for processing signals received by a mobile communication terminal comprising means for determining if a received signal is a voice signal or an alert signal; means for filtering the received signal to produce a first voice signal, if the received signal is a voice signal; means for amplifying the received signal to generate a first amplified alert signal, if the received signal is an alert signal; means for determining if a vibration status is set; means for filtering the first amplified alert signal to generate a ring signal, if the vibration status is not set; means for producing a vibration signal, if the vibration status is set; and means for producing at least one of the voice signal, the ring signal, and the vibration signal as output.

An apparatus for processing a communication signal comprising a switch for switching a received signal to at least one of a voice signal and an alert signal; an amplifier for amplifying the received signal to generate a first amplified alert signal, if the received signal is an alert signal; a signal generating unit for generating a vibration enable signal; a filter for filtering the received signal to produce a first voice signal, if the received signal is a voice signal, and for filtering the first amplified alert signal to generate a ring signal; a switch for generating a vibration signal, if the vibration enable signal is set.

In some embodiments, a multi function device (MFD) is included, wherein the MFD vibrates if the vibration signal is generated. A multi function device (MFD), wherein the MFD rings if the ring signal is generated, may also be included. A multi function device (MFD), wherein the MFD produces voice if a voice signal is generated, may be also included in one or more embodiments. In certain embodiments, the MFD receives at least one of the vibration, ring, or voice signals.

In accordance with yet another embodiment, a mobile terminal having an MFD comprises a signal processor that outputs an analog signal and a control signal; a filter module in communication with the signal processor to output a filtered signal and an unfiltered signal; and a switch in communication with the filter module and responsive to the control signal to output the filtered signal to the MFD when the control signal is at a first level, and to output the unfiltered signal when the control signal is at a second level.

These and other embodiments of the present invention will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
Figure 1 is a schematic block diagram of a general mobile communication terminal;
Figure 2 illustrates a mobile communication terminal with an MFD in accordance with a conventional art;
Figure 3 illustrates an exemplary configuration of an apparatus for improving a sound quality of an MFD in a mobile communication terminal having an MFD in accordance with a first embodiment of the present invention; and
Figure 4 illustrates an exemplary configuration of an apparatus for improving a sound quality of an MFD in a mobile communication terminal having an MFD in accordance with a second embodiment of the present invention.

Features, elements, and aspects of the invention that are referenced by the same numerals in different figures represent the same, equivalent, or similar features, elements, or aspects in accordance with one or more embodiments of the system.

### DETAILED DESCRIPTION OF THE PREFERRED EMBODIMENTS

A voice signal has a small signal level compared to a ring signal and an oscillation frequency signal, so it needs not be amplified. A frequency corresponding to a resonance frequency (e.g., 180 Hz) exists also in the voice signal or the ring signal.

Sometimes, after the voice signal, the ring signal and the oscillation frequency signal are all amplified, the MFD is driven, and the voice signal and the ring signal containing the resonance frequency do not undergo any special processing. Thus, the echo phenomenon occurs due to the weak vibration owing to the resonance frequency when a voice or a ring is outputted.

In accordance with one embodiment of the invention, a signal to be amplified and a signal not to be amplified are discriminated for processing, and an oscillation frequency of below 200Hz, for example, is removed from the voice signal and the ring signal. A method for improving a sound quality of an MFD in accordance with a first embodiment of the present invention comprises amplifying an audio signal (e.g., a voice signal, a ring signal and an oscillation frequency signal); removing an oscillation frequency component from the amplified audio signal (e.g., voice signal and ring signal); and switching the amplified audio signal and the oscillation frequency component-removed from the audio signal to an MFD according to an operation mode of a terminal.

In one or more embodiments, various signals for switching the audio signal are implemented. For example, a vibration enable signal outputted from the processing unit corresponding to the operation mode of the terminal will be studied in the following. The vibration enable signal is set to a first value (e.g., logic '0') in the call mode and the ring mode. The vibration enable signal is set to a second value (e.g., logic '1') for a vibration mode.

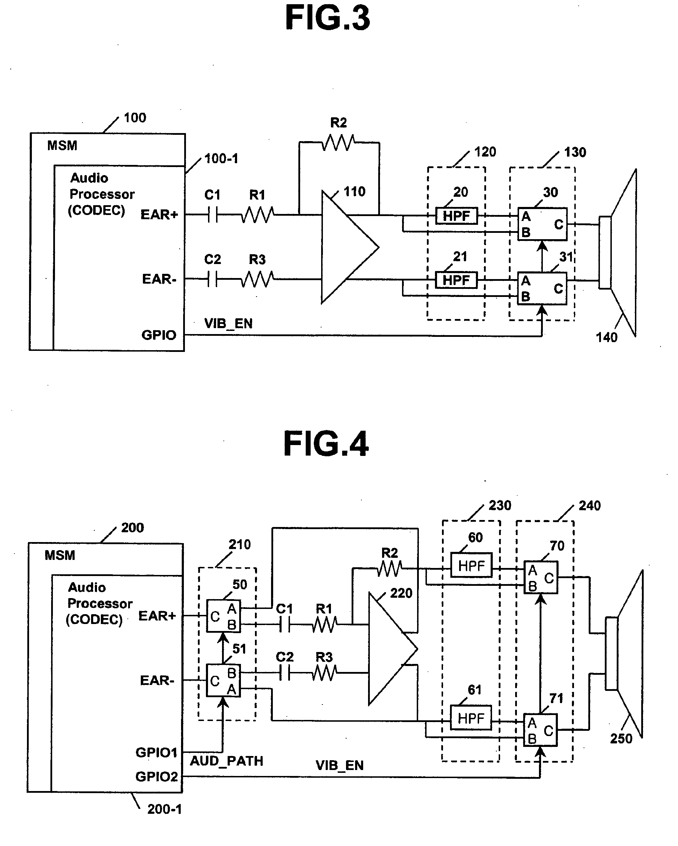

Referring to Figure 3, a filtering unit 120 comprises of two high pass filters (HPF) 20 and 21 for removing an oscillation frequency component from an audio signal (voice signal and ring signal) which has been amplified in an audio amplifier 110 after having been outputted from an audio processor 100-1 of the processing unit 100.

A switching unit 130 comprises of two audio switches 30 and 31 for switching the audio signal amplified in the audio amplifier 110 and the output signal of the filtering unit 120 to an MFD 140 according to a vibration enable signal (VIB_EN) outputted from a control terminal (GPIO) of the processing unit 100. Table 1 shows states of the vibration enable signal (VIB_EN) according to the operation mode of the terminal.

**Table 1**

| Operation mode | Call mode | Ring mode | Vibration mode | Reserved |
|---|---|---|---|---|
| VIB_EN | 0 | 0 | 1 | 1 |

Then, the two filters 20 and 21 of the filtering unit 110 filter the voice signal or the ring signal which has been amplified by the audio amplifier 110 to remove an oscillation frequency component from the corresponding signal, and the two audio switches 30 and 31 of the switching unit 130 output the audio signal inputted to a terminal 'A' or a terminal 'B' to the MFD 140 through a terminal 'C'.

That is, in the call mode or in the ring mode, the two audio switches 30 and 31 output the voice signal or the ring signal outputted from the filtering unit 120 to the MFD 140, while in the vibration mode, the two audio switches 30 and 31 output the oscillation frequency signal which has been amplified in the audio amplifier 110.

In a second embodiment, a method for improving a sound quality of an MFD in accordance with a second embodiment of the present invention comprises dividing the audio signal (e.g., a voice signal, a ring signal or an oscillation frequency signal) processed in the audio processor of the processing unit into different paths. In this case, because the voice signal does not need to be amplified, it is divided into a different path from the path of the ring signal and the oscillation frequency signal.

In one embodiment, a path control signal outputted from the processing unit is set corresponding to the operation mode of the terminal. The path control signal is set different for the call mode and for a destination mode to process the voice signal, the ring signal and the oscillation frequency signal. For example, for the ring mode and the vibration mode, the path control signal may be set to be a first value (e.g., logic '1'), while for the call mode, the path control signal may be set to a second value (e.g., logic '0').

Accordingly, a level of the ring signal and a level of the resonance frequency signal is much greater than a level of the voice signal, and thus, the ring signal and the resonance frequency signal need to be sufficiently amplified. In this respect, however, the amplifier of the audio processor is not enough to amplify the two signals, so that the ring signal and the resonance frequency signal divided in the dividing step are amplified to a level suitable for driving of the MFD.

In addition, there can be a frequency component corresponding to the resonance frequency (i.e., 180 Hz) in the voice signal or in the ring signal. Thus, after the amplifying step is completed, a filtering step is performed to remove the resonance frequency component contained in the voice signal or the amplified ring signal.

When those steps are completed, in the method for improving a sound quality of an MFD in accordance with the second embodiment of the present invention, the corresponding signals are selectively switched to the MFD according to each mode. For example, a vibration enable signal outputted from the processing unit can be set corresponding to the operation mode of the mobile communication terminal The switching step, in some embodiments, is performed following the filtering step. However, the order of performance of the operations can be done in alternative manners. For example, the switching step can be performed first and then the filtering step, if necessary.

Consequently, in the method for improving a sound quality of an MFD in accordance with one embodiment of the invention, the signal which needs to be amplified and the signal which does not need to be amplified are discriminated and processed, and frequency below approximately 200 Hz is removed from the voice signal and the ring signal, so that degradation of a sound quality of a voice or a ring as in the conventional art can be effectively prevented.

Referring to Figure 4, an apparatus for improving a sound quality of an MFD comprises a first switching unit 210 for dividing a voice signal, a ring signal and an oscillation frequency signal outputted from an audio processor 200-1 into first path and second path. The operation of the first switching unit 210 is controlled by a control signal (AUD_PATH) provided by the processing unit 200 corresponding to an operation mode of a mobile communication terminal. In some embodiments, the first switching unit 210 comprises of two audio switches 50 and 51 which respectively switch audio signals outputted from two output terminals (EAR+ and EAR-).

The apparatus for improving a sound quality of an MFD in accordance with the present invention includes an audio amplifier 220 for amplifying the ring signal and the oscillation frequency signal divided into the second path, and a filtering unit 230 for filtering the voice signal divided into the first path and the ring signal amplified in the audio amplifier 220. The filtering unit comprises of two high pass filters (HPF) 60 and 61.

The apparatus for improving a sound quality of an MFD in accordance with the present invention also includes a second switching unit 240 for selectively outputting output signals of the audio amplifier 220 and the filtering unit 230 to an MFD 260. The operation of the second switching unit 210 is controlled by a vibration enable signal (VIB_EN) outputted from the processing unit 200 corresponding to the operation mode of the mobile communication terminal. The second switching unit 240 comprises of two audio switches 70 and 71.

The operation of the apparatus for improving a sound quality of an MFD in accordance with the present invention constructed as described above will now be explained. The operation according to three operation modes, that is, a call mode, a ring mode and a vibration mode, is provided below.

When a mobile communication terminal is in a call mode, the audio processor 200-1 converts a digital voice signal demodulated in the processing unit 200 into an analog voice signal and outputs the corresponding voice signal to the first switching unit 210 through the output ports (EAR+ and EAR-).

Upon receiving the voice signal through a terminal 'C', the two audio switches 50 and 51 of the first switching unit 210 output it to a terminal 'A' or a terminal 'B' according to a path control signal (AUD_PATH) outputted from the control terminal (GPIO1 ) of the processing unit 200. Table 2 shows states of the path control signal (AUD_PATH) and the vibration enable signal in each operation mode.

**Table 2**

| Operation mode | Call mode | Ring mode | Vibration mode | Reserved |
|---|---|---|---|---|
| AUD_PATH | 0 | 1 | 1 | 0 |
| VIB_EN | 0 | 0 | 1 | 1 |

As shown in Table 2, because the path control signal (AUD_PATH) is in a low state ('0') in the call mode, the two audio switches 50 and 51 output the inputted voice signal to the first path through the terminal 'A'. Accordingly, the voice signal is directly transmitted to the filtering unit 230 without passing through the audio amplifier 220. That is, a level of the voice signal is smaller than that of the ring signal or the oscillation frequency signal, so that the voice signal needs not be much amplified but amplified to a sufficient level with the inner amplifier of the audio processor 200-1, and thus, the voice signal is transmitted directly to the filtering unit 230.

The two filters 60 and 61 of the filtering unit 230 remove a frequency component of below 230 Hz from the voice signal and outputs it to the second switching unit 240. The reason of removing the frequency component of below 200 Hz from the voice signal is because a sound of below 300 Hz can be hardly reproduced in terms of a speaker structure of the terminal for outputting a voice or a ring, and especially, if the oscillation frequency component is contained in the voice signal, the MFD is vibrated, degrading a sound quality.

The two audio switches 70 and 71 of the second switching unit 240 respectively output the voice signal inputted through the terminal 'A' to the MFD 150 through the terminal 'C' according to the low vibration enable signal (VIB_EN) outputted from a control terminal GPIO2 of the processing unit 200. As the voice signal outputted from the second switching unit 240 passes through a voice coil and a vibration plate of the MFD 250, a voice is generated.

When a call is terminated in a state that a user sets a ring for a termination notification, an analog audio signal is inputted from the audio processor 200-1 to the first audio switch 210. In Table 2, because the path control signal (AUD_PATH) has the high level ('1'), the two audio switches 50 and 51 of the first switching unit 210 output a ring signal inputted to the terminal 'C' to the second path through the terminal 'B', and the ring signal of the second path is amplified in the audio amplifier 220. That is, the ring signal has a high signal level compared to the voice signal, so that the ring signal can be amplified sufficient by using the audio amplifier 220.

The two HPFs 60 and 61 of the filtering unit 230 remove a frequency component of below 200 Hz from the ring signal which has been amplified in the audio amplifier 220 and output it to the second switching unit 240. The two audio switches 70 and 71 of the second switching unit 240 output the ring signal inputted to the terminal 'A' to the MFD 250 through the terminal 'C' according to the high ('1') vibration enable signal (VIB_EN). As the ring signal outputted from the second audio switch 240 passes through the voice coil and the vibration plate of the MFD 250, a ring is generated.

When a call is terminated in a state that a user sets a vibration mode for a termination notification, an oscillation frequency signal outputted from the audio processor 200-1 is inputted to the first switching unit 210. At this time, because the path control signal (AUD_PATH) is of a high level, the two audio switches 50 and 51 of the first switching unit 210 switch the inputted oscillation frequency signal to the audio amplifier 220.

In this respect, generally, the vibration resonance frequency signal for vibration should contain a frequency of about 180 Hz. Thus, the two audio switches 70 and 71 of the second switching unit 240 output the oscillation frequency signal inputted to the terminal 'B' to the MFD 250 through the terminal 'C' according to the high level vibration enable signal (VIB_EN). Then, the vibration plate of the MFD 250 is resonated with the resonance frequency of the inputted signal, so that the mobile communication terminal is vibrated.

As so far described, the apparatus and method for improving a sound quality of the MFD of the present invention have the following advantage. That is, a signal which needs to be processed and a signal which does not need to be processed are discriminated for processing and the frequency of below 200 Hz is removed from the voice signal and the ring signal. Therefore, degradation of sound quality generated when a voice or a ring is outputted can be effectively prevented.

It should also be understood that the programs, modules, processes, methods, and the like, described herein are but an exemplary implementation and are not related, or limited, to any particular computer, apparatus, or computer programming language. Rather, various types of general-purpose computing machines or devices may be used with logic code implemented in accordance with the teachings provided, herein. Further, the order in which the steps of the present method are performed is purely illustrative in nature. In fact, the steps can be performed in any order or in parallel, unless indicated otherwise by the present disclosure.

The method of the present invention may be performed in either hardware, software, or any combination thereof, as those terms are currently known in the art. In particular, the present method may be carried out by software, firmware, or macrocode operating on a computer or computers of any type. Additionally, software embodying the present invention may comprise computer instructions and be stored in a recording medium (e.g., ROM, RAM, magnetic media, punched tape or card, compact disk (CD, DVD, etc.). Furthermore, such software may be transmitted in the form of a computer signal embodied in a carrier wave, or through communication networks by way of Internet websites, for example. Accordingly, the present invention is not limited to any particular platform, unless specifically stated otherwise in the present disclosure.

Thus, methods and systems for improving sound quality of an MFD in a mobile communication terminal are provided. The present invention has been described above with reference to preferred embodiments. However, those skilled in the art will recognize that changes and modifications may be made in these preferred embodiments without departing from the scope of the present invention.

The embodiments described above are to be considered in all aspects as illustrative only and not restrictive in any manner. Thus, other exemplary embodiments, system architectures, platforms, and implementations that can support various aspects of the invention may be utilized without departing from the essential characteristics described herein. These and various other adaptations and combinations of features of the embodiments disclosed are within the scope of the invention. The invention is defined by the claims and their full scope of equivalents.

## Claims

1. A method for improving a sound quality of an MFD comprising:
amplifying an audio signal received from a base station;
removing an oscillation frequency component from the amplified audio signal; and
switching the amplified audio signal and the amplified audio signal with the oscillation frequency component removed to an MFD according to an operation mode of a terminal.

2. The method of claim 1, wherein the audio signal is one of a voice signal, a ring signal and an oscillation frequency signal.

3. The method of claim 1, wherein the amplified audio signal with the frequency component removed is a voice signal or a ring signal.

4. A method for improving a sound quality of an MFD comprising:
dividing an audio signal into first and second paths according to a path control signal;
amplifying the signal on the second path;
filtering the signal on the first path and the amplified signal on the second path; and
selectively outputting the filtered signal and the amplified signal on the second path to an MFD according to a vibration enable signal.

5. The method of claim 4, wherein the audio signal is one of a voice signal, a ring signal and an oscillation frequency signal, and the filtered signal of the second path is a ring signal.

6. The method of claim 4, wherein the signal on the first path is a voice signal and the signal on the second path is one of a ring signal and an oscillation frequency signal.

7. The method of claim 4, wherein the audio signal is outputted to the first path in a call mode and outputted to the second path in a ring mode and a vibration mode.

8. The method of claim 4, wherein the filtered signal is outputted to the MFD in the call mode and in the ring mode, while the amplified signal is outputted as it is to the MFD in the vibration mode.

9. The method of claim 4, wherein the path control signal has a low level in the call mode and a high level in the ring mode and in the vibration mode, while the vibration enable signal has a low level in the call mode and the ring mode and a high level in the vibration mode.

10. An apparatus for improving a sound quality of an MFD comprising:
an audio amplifier for amplifying an audio signal received from a base station;
a filtering unit for filtering an output signal of the audio amplifier; and
a switching unit for selectively outputting an output signal of the filtering unit and the audio amplifier according to a vibration enable signal.

11. The apparatus of claim 10, wherein the vibration enable signal is outputted from an processing unit (Mobile Station Modem) corresponding to an operation of a terminal, and has a low level in a call mode and in a ring mode and a high level in a vibration mode.

12. An apparatus for improving a sound quality of an MFD comprising:
a first switching unit for selectively switching an audio signal received from a base station to first or to second path according to a path control signal;
an audio amplifier for amplifying the audio signal of the second path;
a filtering unit for filtering the audio signal of the first path and the output signal of the audio amplifier; and
a second switching unit for selectively switching an output signal of the filtering unit and the audio amplifier to an MFD according to a vibration enable signal.

13. The apparatus of claim 12, wherein the first and second switching units comprise of two analog audio switches, respectively, and the filtering unit comprises of two high pass filters.

14. The apparatus of claim 12, wherein the path control signal and the vibration enable signal are outputted from a processing unit (Mobile Station Modem) corresponding to an operation mode of the terminal.

15. The apparatus of claim 14, wherein the path control signal has a low level in the call mode and a high level in the ring mode and in the vibration mode, while the vibration enable signal has a low level in the call mode and the ring mode and a high level in the vibration mode.

16. The apparatus of claim 12, wherein the audio signal is one of a voice signal, a ring signal and an oscillation frequency signal.

17. The apparatus of claim 12, wherein the signal of the first path is a voice signal, while the signal of the second path is one of a ring signal and an oscillation frequency signal.

18. The apparatus of claim 12, wherein the filtered output signal of the audio amplifier is a ring signal.

19. The apparatus of claim 12, wherein the first switching unit outputs an audio signal to the first path in a call mode and outputs it to the second path in a ring mode and in a vibration mode.

20. The apparatus of claim 12, wherein the second switching unit outputs an output signal of the filtering unit to the MFD in the call mode and in the ring mode, and outputs an output signal of the audio amplifier to the MFD in the vibration mode.

21. A method of processing a communication signal, the method comprising:
determining if a received signal is at least one of a voice signal and an alert signal;
filtering the received signal to produce a first voice signal, if the received signal is a voice signal;
amplifying the received signal to generate a first amplified alert signal, if the received signal is an alert signal;
determining if a vibration status is set;
filtering the first amplified alert signal to generate a ring signal, if the vibration status is not set;
producing a vibration signal, if the vibration status is set; and
producing at least one of the voice signal, the ring signal, and the vibration signal as output.

22. The method of claim 21 further comprising providing the output signal to a multi function device (MFD).

23. The method of claim 22 further comprising:
causing the MFD to vibrate, if the output signal comprises the vibration signal;
causing the MFD to ring, if the output signal comprises a ring signal; and
causing the MFD to produce voice output, if the output signal comprises a voice signal.

24. The method of claim 21, where in filtering the voice signal and filtering the first amplified alert signal removes an oscillation frequency component from the first amplified alert signal.

25. A method of improving sound quality comprising:
amplifying the received signal to generate an amplified signal;
filtering the amplified signal to generate a filtered signal, if a vibration status is not set; and
producing a vibration signal, if the vibration status is set and the amplified signal does not contain voice components.

26. The method of claim 25, wherein the step of filtering the amplified signal further comprises:
producing a voice signal, if the amplified signal comprises voice components.

27. The method of claim 25, wherein the step of filtering the amplified signal further comprises:
producing a ring signal, if the amplified signal comprises ring components.

28. An apparatus for processing signals received by a mobile communication terminal comprising:
means for determining if a received signal is a voice signal or an alert signal;
means for filtering the received signal to produce a first voice signal, if the received signal is a voice signal;
means for amplifying the received signal to generate a first amplified alert signal, if the received signal is an alert signal;
means for determining if a vibration status is set;
means for filtering the first amplified alert signal to generate a ring signal, if the vibration status is not set;
means for producing a vibration signal, if the vibration status is set; and
means for producing at least one of the voice signal, the ring signal, and the vibration signal as output.

29. An apparatus for processing a communication signal comprising:
a switch for switching a received signal to at least one of a voice signal and an alert signal;
an amplifier for amplifying the received signal to generate a first amplified alert signal, if the received signal is an alert signal;
a signal generating unit for generating a vibration enable signal;
a filter for filtering the received signal to produce a first voice signal, if the received signal is a voice signal, and for filtering the first amplified alert signal to generate a ring signal;
a switch for generating a vibration signal, if the vibration enable signal is set.

30. The apparatus of claim 29 further comprising a multi function device (MFD), wherein the MFD vibrates if the vibration signal is generated.

31. The apparatus of claim 29 further comprising a multi function device (MFD), wherein the MFD rings if the ring signal is generated.

32. The apparatus of claim 29 further comprising a multi function device (MFD), wherein the MFD produces voice if a voice signal is generated.

33. The apparatus of claim 29 further comprising a multi function device (MFD) utilized in a mobile communication terminal, wherein the MFD receives at least one of the vibration, ring, or voice signals.

34. A mobile terminal having an MFD, the mobile terminal comprising:
a signal processor that outputs an analog signal and a control signal;
a filter module in communication with the signal processor to output a filtered signal and an unfiltered signal; and
a switch in communication with the filter module and responsive to the control signal to output the filtered signal to the MFD when the control signal is at a first level, and to output the unfiltered signal when the control signal is at a second level.
